# EUROPEAN PATENT SPECIFICATION

(11) **EP 1 960 641 B1**
(45) Date of publication and mention of the grant of the patent: **01.04.2009**
(21) Application number: 05826017.5
(22) Date of filing: 08.11.2005
(51) Int. Cl.: F01N 7/10, F02B 37/00

(54) **EXHAUST GAS CONTROL APPARATUS**
ABGASSTEUERVORRICHTUNG
APPAREIL DE COMMANDE DES GAZ D' ÉCHAPPEMENT

(43) Date of publication of application: 27.08.2008
(73) Proprietor: RENAULT TRUCKS, 69800 St Priest (FR)
(72) Inventor: LORTET, Dimitri, S-417 64 Göteborg (SE); LEJEUNE, Marc, F-69002 LYON (FR)
(74) Representative: Putet, Gilles
(86) International application number: PCT/IB2005/003999
(87) International publication number: WO 2007/054754

(56) References cited:
- CH-A- 139 282
- DE-A1- 3 312 093
- FR-A- 2 572 458
- FR-A- 2 863 306
- US-A- 4 207 742

## Description

### Field of the invention

The present invention relates to an exhaust gas control apparatus.

### Technological background

Generally, a combustion engine creates work by burning a fuel such as for example gasoline, diesel or liquid petroleum gas within the engine. A combustion engine works by burning said fuel in a chamber defined by a cylinder and a moving piston which is linked to a crankshaft.

To increase its power output, a combustion engine can be equipped with a turbocharger. A turbocharger is an exhaust driven compressor which increases the mass of oxygen entering the engine. Conventionally, a turbocharger includes a gas compressor in the intake tract of the engine which compresses the intake air above the atmospheric pressure. The compressor is driven by a turbine which uses waste energy from the exhaust gas. To this end, the compressor and the turbine are connected to a unique shaft.

Although a turbocharger can greatly increase the engine power with only a slight increase in weight, it appears that a significant part of the exhaust gas energy is lost.

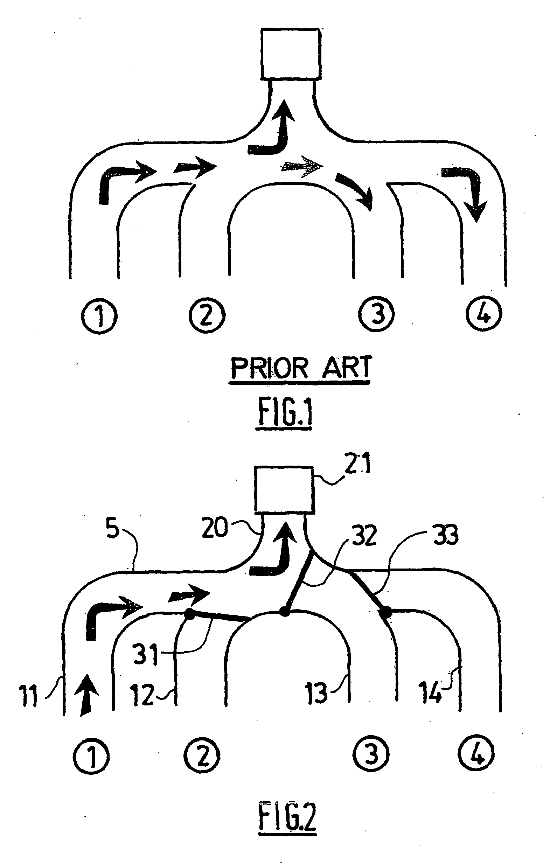

A typical combustion engine is provided with a cylinder head upon which an exhaust manifold is secured. The cylinder head is provided with one or more exhaust valves per cylinder which control the flow of gas into an exhaust port; the exhaust manifold collects the exhaust gases coming from the cylinder head exhaust ports. Referring to Fig.1, an exhaust manifold includes as many inlet ports 11, 12, 13, and 14 as there are cylinders in the engine, each inlet port merging into a single output pipe 20. A turbocharger turbine 21 is located on this output pipe so that the turbine is driven by the exhaust gases released from each cylinder.

An important point lays on the fact that, during the exhaust stroke, the exhaust gases generated in a cylinder pass the then-open exhaust valve or valves and enter the inlet port. At the opening of the exhaust valve or valves, the exhaust gases form a high pressure exhaust pulse. The exhaust gases travel in the entire exhaust manifold as this is shown on Fig 1. Fig 1 illustrates a four cylinder exhaust manifold whereby exhaust gases are released from one of the cylinders. The arrows illustrate the course of the exhaust gas; as this is apparent from Fig 1, the exhaust gas migrates in the entire exhaust manifold where a part of the kinetic as well as thermal energy contained in the exhaust gas is dissipated. Therefore, a part of the energy contained in the exhaust gas is lost as only a fraction of the kinetic and thermal energy contained in the exhaust gas arrives at the turbine.

It therefore appears that there is room for improvement in the field of turbocharged combustion engines.

An example of an exhaust manifold adapted to reduce kinetic enery loss of the exhaust gas on its way to a turbocharger is known from FR 2 863 306.

### Summary of the invention

It is an object of the invention to improve the overall efficiency of a turbo charged combustion engine.

The invention relates to an exhaust gas control apparatus for an internal combustion engine having at least two cylinders, a turbine, and an exhaust manifold collecting a flow of exhaust gases formed in each cylinder towards the turbine; the exhaust manifold has an inlet port connected to each cylinder and an output port upon which the turbine is secured. The exhaust gas control apparatus comprises at least one sealing means positioned between two adjacent inlet ports, each sealing means being articulated relative to the exhaust manifold and being capable of sealing one of the two adjacent inlet ports to reduce the internal volume of the exhaust manifold available for the flow of exhaust gas.

The invention, therefore, provides an apparatus which makes it possible to control and modify the internal geometry of an exhaust manifold so as to optimize the flow of the exhaust gases generated by the engine towards a turbine. In other words, by providing sealing means which seal at least one of the inlet ports not in use, that is to say, one of the inlet ports connected to a cylinder not in an exhaust cycle, the invention makes it possible to channel the exhaust gases towards the output port and, therefore, towards the turbine. In effect, the apparatus of the invention reduces the internal volume of the exhaust manifold according to the engine cycle. By doing so, most of the kinetic energy of the exhaust gases is channelled towards the turbine; this is in contrast with a traditional exhaust manifold whereby a part of the kinetic and thermal energy of the exhaust gases is dissipated within the internal volume of all the inlet ports of the exhaust manifold.

The overall effect of the apparatus is an improvement of the global output of the engine as more energy is received by the turbine compared to an engine having a traditional exhaust manifold.

Preferably, each sealing means is pivotally connected to the exhaust manifold.

Advantageously, the sealing means are connected to the exhaust manifold by connection means which are positioned towards the direction of the exhaust gas. This allows the sealing means to be moved by the exhaust gas. Accordingly, the apparatus does not require any external control; instead the flow of exhaust gas regulates the internal volume of the exhaust manifold.

In an embodiment of the invention, the apparatus includes at least one sealing device pivotally articulated relative to the exhaust manifold and being capable of sealing one of the two adjacent inlet ports.

In this embodiment, the sealing device can include two flappers pivotally connected to each other and an elastic element interposed between said two flappers. The elastic element urges each flapper in a closing position. In operation, one of the flappers is pushed by the outgoing flow of the exhaust gases while the other flapper is maintained in a closing position. In this embodiment, the apparatus is completely self regulated and does not require any external control.

It can be envisaged that the apparatus can include a sealing device positioned between two adjacent inlet ports.

It can also be envisaged that the apparatus includes a sealing device positioned between two adjacent inlet ports except between the two adjacent inlet ports opposite the output port as in effect each of the two sealing device which are adjacent to the output port can seal half the internal volume of the exhaust manifold.

In a further embodiment, the apparatus includes at least one valve pivotally articulated relative to the exhaust manifold and being capable of sealing one of the two adjacent inlet ports. In this embodiment, a pivotal valve provides simple, reliable and effective sealing means which channel the exhaust gas.

If can be envisaged that a valve is positioned between two adjacent inlet ports.

Preferably, the central valve which is opposite the exhaust manifold output port is capable of sealing half the internal volume of the exhaust manifold.

Advantageously, the central valve can seat on each side of the inlet port to alternatively seal half the internal volume of the exhaust manifold.

These and other advantages will become apparent upon reading the following description in view of the drawing attached hereto representing, as a non-limiting example, various embodiments of an apparatus according to the invention.

### Brief description of the drawing

The following detailed description of embodiments of the invention is better understood when read in conjunction with the appended drawing being understood, however, that the invention is not limited to the specific embodiments disclosed. In the drawing,
Figure 1 illustrates a conventional exhaust manifold,
Figure 2 illustrates an exhaust manifold for a four cylinder combustion engine equipped with an embodiment of the apparatus according to the invention,
Figure 3 illustrates an exhaust manifold for a six cylinder combustion engine equipped with the same embodiment of the apparatus according to the invention as the one of Figure 2,
Figures 4 to 6 illustrate an exhaust manifold for a six cylinder combustion engine equipped with another embodiment of the apparatus according to the invention; Figures 4 to 6 illustrate respectively, during the engine operation, how the apparatus according to the invention controls the flow of exhaust gas generated respectively by six cylinders.

### Detailed description of the invention

The exhaust gases control apparatus of the present invention is shown in Figs 2 to 6.

Fig. 2 shows an exhaust manifold 5 for a four cylinder combustion engine equipped with a first embodiment of the apparatus. The exhaust manifold 5 includes four inlet ports 11, 12, 13, 14. Each of the inlet ports 11, 12, 13, 14 is connected to one or more exhaust valves disposed in an engine cylinder head; the exhaust valve(s) release(s) the exhaust gas during the engine exhaust stroke. Neither the engine nor the exhaust valve is further described as they are not part of the present invention. The cylinders are conventionally numbered from 1 to 4.

The inlet ports 11, 12, 13, 14 merge into an output port 20 upon which a turbine 21 of a turbocharger is fixed. Although not illustrated, the turbine 21 is mechanically linked to a compressor in a known per se manner.

As depicted in Fig. 2, three valves 31, 32, 33 are disposed in the exhaust manifold. Each valve is pivotally articulated at the junction of two adjacent inlet ports. Each valve is free to rotate from a first position whereby said valve seals a first adjacent exhaust gas inlet port, to a second position whereby said valve seals a second adjacent exhaust gas inlet port. The valves operate via the exhaust gas pressure alone and are intended to restrict the flow of exhaust gas to a single direction. Thus, when exhaust gases are released by an exhaust valve into one of the four exhaust manifold inlet ports at a high pressure, the valve is pushed by the pressure of the exhaust gases and seals the adjacent inlet port. As this is apparent from Fig 2, the central valve 32 can be longer than the other two valves 31 and 33 and, therefore, can seal, depending on its position, half of the internal volume of the exhaust manifold, that is to say, in the illustrated example, two inlet ports. Depending on the position of the central valve 32, either the inlet ports 11 and 12 or the inlet ports 13 and 14 are sealed.

Fig. 2 illustrates a cycle of the engine whereby the cylinder 1 is under an exhaust stroke. Therefore, the exhaust gases generated by a combustion that took place in the cylinder 1 are discharged into the inlet port 11. The pulse of the exhaust gases discharged at a high pressure pushes the valve 31 into a position whereby the valve 31 seals the inlet port 12 and pushes the valve 32 into a position whereby the valve 32 seals half the internal manifold volume. As this clearly appears on Fig 2, the internal volume of the exhaust manifold is significantly reduced for the flow of exhaust gas released from cylinder 1. The flow of exhaust gas which is represented by the arrows of Fig. 2 is channelled towards the output port 20. The apparatus according to the invention denies the flow of exhaust gas any access to the input pipe 12, 13, 14, where in a traditional manifold, the flow of exhaust gases would dissipate its kinetic and/or thermal energy.

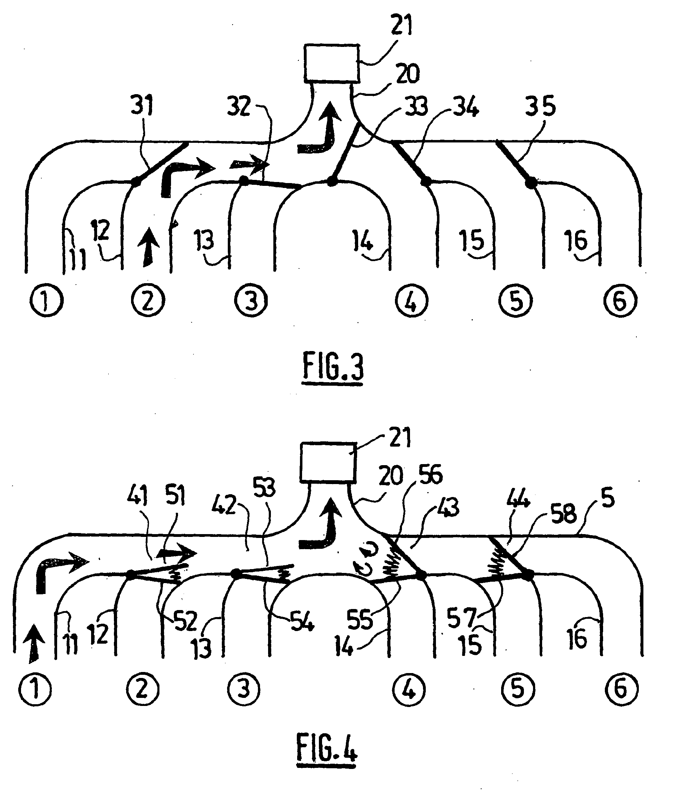

Fig. 3 illustrates an apparatus according to the invention implemented into a six cylinder engine. The apparatus operates according to a similar principle as the one represented in Fig. 2.

Illustrated on Fig. 3 is a six cylinder engine where the cylinder 2 is discharging a pulse of exhaust gases into the inlet port 12.

The flow of exhaust gas coming from the inlet port 12 pushes the two valves 31 and 32 which are adjacent to the inlet port 12 and pushes the central valve 33 which controls the access to half the manifold internal volume.

The flow of exhaust gas coming from the inlet port 12 is again channelled towards the output port 20 without any loss.

Similarly when exhausted gases are discharged from cylinder 3, 4, 5 or 6, the exhaust gases are channelled by the two adjacent valves 32, 34, 35 and the central valve 33 when the exhaust gases are discharged from cylinder 3, 4 or 5 or the exhaust gases are channelled only by the valve 35 and the central valve 33. In the latter case, the inlet port 16 which is at the extremity of the exhaust manifold is equipped with a single valve as a single valve can seal this inlet port.

Figs 4 to 6 illustrate another embodiment of the apparatus according to the invention.

Figs 4 to 6 show an exhaust manifold for a six cylinder engine in which are disposed four inlet port sealing devices 41, 42, 43, 44.

Each sealing device includes two flappers and an elastic element such as a spring. The two flappers are pivotally fixed onto the exhaust manifold between two adjacent inlet ports with, however, the exception of the two adjacent central ports which are not fitted with a sealing device.

The elastic element is interposed between the two flappers and, therefore, maintains the flappers away from each other.

When idle, the sealing device seals the access of the two inlet ports adjacent to the sealing device. The sealing state of the two inlet ports is achieved by the elastic element which biases the flappers in a position where each flapper seals an inlet port. In the illustrated example of Figs 4 to 6, the sealing device 41 can seal the inlet ports 11 and 12 respectively with the flappers 51 and 52; the sealing device 42 can seal the inlet ports 12 and 13 respectively with the flappers 53 and 54; the sealing device 43 can seal the inlet ports 14 and 15 respectively with the flappers 55 and 56; the sealing device 44 can seal the inlet ports 15 and 16 respectively with the flappers 57 and 58. It can be noted that the sealing devices 42 and 43 can respectively seal half the internal volume of the exhaust manifold.

Figure 4 illustrates an engine state whereby the cylinder 1 is in an exhaust stoke and therefore discharges a pulse of exhaust gases into the inlet port 11.

The flow of exhaust gases pushes the flapper 51 which can pivot towards the flapper 52 and also pushes the flapper 53 towards the flapper 54. The flow of exhaust gases cannot access the inlet ports 14, 15 or 16 as the sealing device 43 prevents the passage of exhaust gas to the part of the manifold which includes the inlet ports 14, 15 and 16. In effect, the flow of exhaust gas is channelled towards the output port 20. At the end of the exhaust stroke of the cylinder 1, the flapper 51 of the sealing device 41 and the flapper 42 of the sealing device 42 are no longer subject to any pressure; at that point the elastic element of each sealing device can push the flappers 51 and 53 into their respective sealing positions.

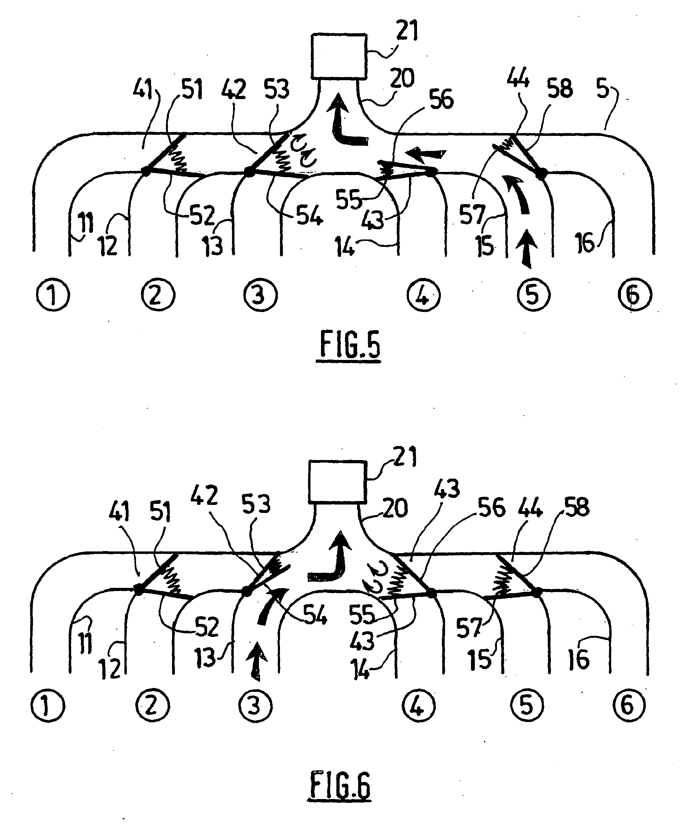

Fig. 5 depicts the engine when exhaust gases are discharged from the cylinder 5.

First of all, the pulse of exhaust gas pushes the flapper 57 of the sealing device 44. The flow of exhaust gas is directed towards the output port 21 and the inlet ports 14, 13, 12 and 11; the access to the inlet port 16 is prevented by the sealing device 58.

Then, the flow of exhaust gas pushes the flapper 56 of the sealing device 43 thereby orienting the flow of gas towards the output port 21 and the output ports 13, 12 and 11; the access to the inlet port 14 is prevented by the sealing device 43.

The flow of exhaust gas is then channelled to the output port 21 as the sealing device 42 seals the access to the part of the exhaust manifold which includes the output ports 11, 12, 13.

At the end of the exhaust stroke of the cylinder 5, the flapper 57 of the sealing device 44 and the flapper 56 of the sealing device 43 are no longer subject to any pressure; at that point the elastic elements of each sealing device can push the flappers 57 and 56 into their respective sealing positions.

Fig. 6 depicts the engine when exhaust gases are discharged from the cylinder 3.

The pulse of exhaust gas pushes the flapper 54 of the sealing device 42. The flow of exhaust gas is directed towards the output port 21 and the inlet ports 14, 15 and 16; the access to the inlet ports 12 and 11 is prevented by the sealing device 42.

The flow of exhaust gas is then channelled to the output port 21 as the sealing device 43 seals the access to the part of the exhaust manifold which includes the output ports 14, 15 and 16.

At the end of the exhaust stroke of the cylinder 5, the flapper 54 of the sealing device 42 is no longer subject to any pressure; at that point the elastic elements of the sealing device 42 can push the flapper 54 into its sealing position.

In the embodiment depicted on Figs 4 to 6, the elastic elements which can equip the sealing devices maintain each flapper in a sealed position and damp the rotational movement of the flappers when they are pushed by the high pressure pulse of exhaust gas. In this respect, the elastic element provide the apparatus with an important element of life expectancy.

In the apparatus depicted on the drawing, the sealing means, which orient the exhaust gas towards the output port, are controlled by the flow of exhaust gases. Accordingly, the apparatus does not require any controlling and driving equipment. In that sense the apparatus is mechanically simple and reliable. However, it can be envisaged to provide each valve or each sealing device with a controlling arrangement such as a micro motor.

The invention is not restricted to the embodiments described above by way of non-limiting examples, but on the contrary it encompasses all embodiments thereof. The apparatus can be implemented onto two, three, four, five, six cylinder engines.

## Claims

1. Exhaust gas control apparatus for an internal combustion engine having
at least two cylinders,
a turbine (21), and
an exhaust manifold (5) collecting a flow exhaust gases formed in each cylinder towards the turbine (21), said exhaust manifold (5) having an inlet port (11,12,13,14,15,16) connected to each cylinder and an output port (20) upon which the turbine (21) is secured,
**characterized in that** the exhaust gas control apparatus comprises at least one sealing means positioned between two adjacent inlet ports, each sealing means being articulated relative to the exhaust manifold (5) and being capable of sealing one of the two adjacent inlet ports to reduce the internal volume of the exhaust manifold available for the flow of exhaust gas.

2. The exhaust gas control apparatus according to claim 1, **characterized in that** each sealing means is pivotally connected to the exhaust manifold (5).

3. The exhaust gas control apparatus according to claim 1 or 2, **characterized in that** the sealing means are fixed on one end onto the exhaust manifold (5) between a first and a second adjacent inlet ports and open a first inlet ports and close the second inlet port upon a discharge of exhaust gases in said first inlet port.

4. The exhaust gas control apparatus according to one the claims 1 to 3 **characterized in that** the apparatus includes at least one sealing device (41, 42, 43, 44) pivotally articulated relative to the exhaust manifold (5) and being capable of sealing one of the two adjacent inlet ports (11, 12, 13, 14, 15, 16).

5. The exhaust gas control apparatus according to claim 4, **characterized in that** the sealing device includes two flappers pivotally connected to each other and an elastic element interposed between said two flappers.

6. The exhaust gas control apparatus according to claim 5, **characterized** the apparatus includes a sealing device positioned between two adjacent inlet ports.

7. The exhaust gas control apparatus according to claim 5, **characterized in that** the apparatus includes a sealing device positioned between two adjacent inlet ports except between the two adjacent ports opposite the output port.

8. The exhaust gas control apparatus according to one of the claims 1 to 3, **characterized in that** the apparatus includes at least one valve (31, 32, 33, 34) pivotally articulated relative to the exhaust manifold, capable of sealing one of the two adjacent inlet ports.

9. The exhaust gas control apparatus according to claim 8, **characterized in that** a valve is positioned between two adjacent inlet ports.

10. The exhaust gas control apparatus according to claim 9, **characterized in that** the apparatus include a central valve (33) which is opposite the exhaust manifold output port (20), capable of sealing half the internal volume of the exhaust manifold.

11. The exhaust gas control apparatus according to claim 10 **characterized in that** the central valve can rest on each side of the inlet port to alternatively seal half the internal volume of the exhaust manifold.

## Patentansprüche

1. Abgassteuervorrichtung für einen Verbrennungsmotor mit
wenigstens zwei Zylindern,
einer Turbine (21) und
einem Abgassammler (5), der in jedem Zylinder gebildete Abgasströmungen in Richtung der Turbine (21) sammelt, wobei der Abgassammler (5) einen mit jedem Zylinder verbundenen Einlasskanal (11, 12, 13, 14, 15, 16) und einen Auslasskanal (20) aufweist, nach dem die Turbine (21) angebracht ist.
**dadurch gekennzeichnet, dass** die Abgassteuervorrichtung wenigstens eine zwischen zwei angrenzenden Einlasskanälen angeordnete Dichtungseinrichtung umfasst, wobei jede Dichtungseinrichtung bezüglich des Abgassammlers (5) gelenkig gelagert ist und einen von zwei angrenzenden Einlasskanälen abdichten kann, um das für die Abgasströmung zur Verfügung stehende Volumen des Abgassammlers zu verringern.

2. Abgassteuervorrichtung nach Anspruch 1, **dadurch gekennzeichnet, dass** jede Dichtungseinrichtung mit dem Abgassammler (5) schwenkbar verbunden ist.

3. Abgassteuervorrichtung nach Anspruch 1 oder 2, **dadurch gekennzeichnet, dass** die Dichtungseinrichtungen an einem Ende an dem Abgassammler (5) zwischen einem ersten und einem zweiten angrenzenden Einlasskanal befestigt sind und bei einer Abfuhr von Abgasen in dem ersten Einlasskanal den ersten Einlasskanal öffnen und den zweiten Einlasskanal schließen.

4. Abgassteuervorrichtung nach einem der Ansprüche 1 bis 3, **dadurch gekennzeichnet, dass** die Vorrichtung wenigstens eine Dichtungsvorrichtung (41, 42, 43, 44) aufweist, die bezüglich des Abgassammlers (5) schwenkbar angelenkt ist und einen der zwei angrenzenden Einlasskanäle (11, 12, 13, 14, 15, 16) abdichten kann.

5. Abgassteuervorrichtung nach Anspruch 4, **dadurch gekennzeichnet, dass** die Dichtungsvorrichtung wenigstens zwei schwenkbar miteinander verbundene Klappen und ein elastisches Element aufweist, das zwischen den zwei Klappen angeordnet ist.

6. Abgassteuervorrichtung nach Anspruch 5, **dadurch gekennzeichnet, dass** die Vorrichtung eine zwischen zwei angrenzenden Einlasskanälen angeordnete Dichtungsvorrichtung aufweist.

7. Abgassteuervorrichtung nach Anspruch 5, **dadurch gekennzeichnet, dass** die Vorrichtung wenigstens eine Dichtungsvorrichtung aufweist, die zwischen zwei angrenzenden Einlasskanälen angeordnet ist, außer zwischen den zwei angrenzenden Kanälen, die dem Auslasskanal gegenüberliegen.

8. Abgassteuervorrichtung nach einem der Ansprüche 1 bis 3, **dadurch gekennzeichnet, dass** die Vorrichtung wenigstens ein Ventil (31, 32, 33, 34) aufweist, das bezüglich des Abgassammlers schwenkbar angelenkt ist und wenigstens einen der zwei angrenzenden Einlasskanäle abdichten kann.

9. Abgassteuervorrichtung nach Anspruch 8, **dadurch gekennzeichnet, dass** ein Ventil zwischen zwei angrenzenden Einlasskanälen angeordnet ist.

10. Abgassteuervorrichtung nach Anspruch 9, **dadurch gekennzeichnet, dass** die Vorrichtung ein Zentralventil (33) aufweist, das gegenüber dem Auslasskanal (20) des Abgassammlers liegt und die Hälfte des Innenvolumens des Abgassammlers abdichten kann.

11. Abgassteuervorrichtung nach Anspruch 10, **dadurch gekennzeichnet, dass** das Zentralventil an jeder Seite des Einlasskanals anliegen kann, um abwechselnd die Hälfte des Innenvolumens des Abgassammlers abzudichten.

## Revendications

1. Appareil pour le contrôle des gaz d'échappement pour un moteur à combustion interne ayant
au moins deux cylindres,
une turbine (21), et
un collecteur d'échappement (5) qui collecte un flux de gaz d'échappement formé dans chaque cylindre en direction de la turbine (21), ledit collecteur d'échappement (5) ayant un port d'entrée (11, 12, 13, 14, 15, 16) connecté à chaque cylindre et un port de sortie (20) sur lequel la turbine (21) est branchée,
**caractérisé en ce que** l'appareil pour le contrôle des gaz de d'échappement comporte au moins un moyen de fermeture agencé entre deux ports d'entrée adjacents, chaque moyen de fermeture étant articulé par rapport au collecteur d'échappement (5) et étant capable de fermer un des deux ports d'entrée adjacent pour réduire le volume interne du collecteur d'échappement disponible pour le flux de gaz d'échappement.

2. Appareil pour le contrôle des gaz d'échappement selon la revendication 1, **caractérisé en ce que** chaque moyen de fermeture est connecté de manière pivotante au collecteur d'échappement (5).

3. Appareil pour le contrôle des gaz d'échappement selon la revendication 1 ou 2, **caractérisé en ce que** les moyens de fermeture sont fixés par une extrémité sur le collecteur d'échappement (5) entre un premier et un second ports d'entrée adjacents et ouvrent un premier port d'entrée et ferment un second port d'entrée lors d'une décharge de gaz d'échappement dans ledit premier port d'entrée.

4. Appareil pour le contrôle des gaz d'échappement selon les revendications 1 à 3, **caractérisé en ce que** l'appareil comporte au moins un dispositif de fermeture (41, 42, 43, 44) articulé de manière pivotante par rapport au collecteur d'échappement (5) et étant capable de fermer un des deux ports d'entrée adjacents (11, 12, 13, 14, 15, 16).

5. Appareil pour le contrôle des gaz d'échappement selon la revendication 4, **caractérisé en ce que** le dispositif de fermeture comporte deux clapets connectés de manière pivotante l'un à l'autre et un élément élastique interposé entre lesdits deux clapets.

6. Appareil pour le contrôle des gaz d'échappement selon la revendication 5, **caractérisé en ce que** l'appareil comporte un dispositif de fermeture agencé entre deux ports d'entrée adjacents.

7. Appareil pour le contrôle des gaz d'échappement selon la revendication 5, **caractérisé en ce que** l'appareil comporte un dispositif de fermeture agencé entre deux ports d'entrée adjacents sauf entre les deux ports adjacents opposés au port de sortie.

8. Appareil pour le contrôle des gaz d'échappement selon les revendications 1 à 3, **caractérisé en ce que** l'appareil comporte au moins une valve (31, 32, 33, 34) articulée de manière pivotante par rapport au collecteur d'échappement, capable de fermer un des deux ports d'entrée adjacents.

9. Appareil pour le contrôle des gaz d'échappement selon la revendication 8, **caractérisé en ce qu'**une valve est agencée entre deux ports d'entrée adjacents.

10. Appareil pour le contrôle des gaz d'échappement selon la revendication 9, **caractérisé en ce que** l'appareil comporte une valve centrale qui est agencée à l'opposé du port de sortie (20) du collecteur d'échappement, capable de fermer la moitié du volume interne du collecteur d'échappement.

11. Appareil pour le contrôle des gaz d'échappement selon la revendication 10, **caractérisé en ce que** la valve centrale peut se positionner de chaque côté du port d'entrée pour alternativement fermer la moitié du volume interne du collecteur d'échappement.
